## Europäisches Patentamt

## European Patent Office

## Office européen des brevets

(19)

(11) Veröffentlichungsnummer: **0 109 104**
**B1**

(12) **EUROPÄISCHE PATENTSCHRIFT**

(45) Veröffentlichungstag der Patentschrift:
**22.07.87**

(51) Int. Cl.⁴: **A 01 K 5/02**

(21) Anmeldenummer: **83201441.9**

(22) Anmeldetag: **07.10.83**

(54) Apparat und Verfahren zum dosierenden Verabreichen von Viehfutter.

(30) Priorität: **15.10.82 NL 8203981**

(43) Veröffentlichungstag der Anmeldung:
**23.05.84 Patentblatt 84/21**

(45) Bekanntmachung des Hinweises auf die Patenterteilung:
**22.07.87 Patentblatt 87/30**

(84) Benannte Vertragsstaaten:
**BE DE FR GB IT LU SE**

(56) Entgegenhaltungen:
**DE-U-7 506 858**
**GB-A-1 191 083**
**US-A-2 793 791**
**US-A-3 437 075**
**US-A-3 648 660**

(73) Patentinhaber: **Wouters, Johannes Christiaan Marie, Tilburgsebaan 9, NL- 4847 NM Teteringen (NL)**

(72) Erfinder: **Wouters, Johannes Christiaan Marie, Tilburgsebaan 9, NL- 4847 NM Teteringen (NL)**

(74) Vertreter: **Siemens, Andreas Meinhard Ernest, Dipl.- Ing., SIEMENS & CIE. Roskam 8, NL- 4813 GZ Breda (NL)**

EP 0 109 104 B1

## Beschreibung

Die vorliegende Erfindung bezieht sich auf eine Vorrichtung für das dosierende Verabreichen von Kraftfutter an jede einzelne Kuh während der Melkzeit im Melkstall.

Wenn Kühe während des Melkens im separaten Melkstall unruhig sind, geben sie weniger Milch und gefährden durch Treten das Personal und die Melkvorrichtung. Wenn Kühe im Melkstall gemolken werden, ist es daher erwünscht, dass sie ruhig stehen bleiben, wozu sie während des Aufenthalts im Melkstall eine zeitlich genau dosierte Menge an trockenem Kraftfutter erhalten sollen, welche der Fressgeschwindigkeit während des Melkens entspricht. Dieses trockene Kraftfutter hat die Form von Brocken.

Futterapparate allgemeiner Art sind aus der Literatur bekannt. U.S.-A-3.437.075 beschreibt ein Gerät für das Verabreichen von Zusatzstoffen zum Trinkwasser für Vieh und Geflügel, in dem Konzentrate separat, doch gleichzeitig in kontinuierlich fliessendesTrinkwasser kurz vor der Aufnahme durch die Tiere gebracht werden, ohne dass diese Konzentrate vorher miteinander gemischt werden. Es besteht aus einem Mischtank für das Trinkwasser mit darüber mehreren grossen Vorratbehältern, die auf einem gemeinsamen Träger montiert sind, in welchen eine Stange mit gebohrten Kanälen verschiedener Grösse gedreht werden kann, bis jeder Zusatzstoff einzeln in das Trinkwasser fällt.

DE-U-75.06.858 beschreibt ein Gerät zur Zufütterung von Kraftfutter an Vieh auf der Weide, in dem ein Vorratssilo mit einem Zellenrad und einer vertikal bewegbaren Bodenplatte versehen ist, wobei bei jedem Auftritt auf die Bodenplatte das Zellenrad betätigt wird, sodass Futter aus dem Silo über eine Rutsche in einen Futtertrog gebracht wird.

U.S.-A-3.648.660 beschreibt einen Apparat, mit welchem trockenes Futter mit Wasser gemischt wird und zu gewissen Zeiten automatisch an Haustiere verabreicht wird, sodass die Haustiere sich selbst überlassen werden können.

Diese Geräte sind jedoch nicht geeignet für das limitierte Darreichen von kleinen Mengen trockenen brockenförmigen Kraftfutters an jede einzelne Milchkuh, individuell während des Melkens im Stand im Melkstall in einer solchen Weise, dass eine genau abgemessene Menge der Brocken ("Lockbrocken") genau der Fressgeschwindigkeit entspricht, sodass die Ruhe der einzelnen Milchkuh im Melkstall während des Melkvorgangs optimal eingehalten wird. Erwünscht ist beispielsweise, dass jede Kuh einzeln in dem Melkverschlag während der Melkdauer von 7 Minuten alle 6 Sekunden 8 Gramm trockene Kraftfutterbrocken erhält, sodass sie während des ganzen Vorgangs 560 Gramm Brocken allmählich, also nach und nach, auffrisst. Die Fressgeschwindigkeit soll also der Zufuhrrate entsprechen.

Es wird ein kleiner Apparat angestrebt, mit dem gerade so viel Futter pro Zeiteinheit verabreicht werden kann, dass die Kuh ruhig bleibt, bis das Melken beendet ist.

Durch die Anwendung der Konstruktion gemäss der vorliegenden Erfindung kann die Ruhe im Melkstall und demzufolge eine optimale Milchproduktion erreicht sowie Vergeudung des Kraftfutters vermieden werden.

Die Vorrichtung für das Verabreichen von trockenen Kraftfutterbrocken an jede einzelne Milchkuh während des Melkens im Melkstall hat einen Antrieb durch einen Elektromotor mit stufenloser Regelung und Verzögerungsgetriebe mit Zeitschaltung, und besitzt ein zylindrisches Gehäuse mit Zufuhrstutzen und Abfuhrstutzen, in welchem Gehäuse um eine horizontale Achse ein Zylinder drehbar angeordnet ist, welcher mit einer keilrinnenförmigen Aussparung oder mit drei derartigen Aussparungen versehen ist, Welche am Umfang des Zylinders breites sind, als an der Seite, die Achse zugekehrt ist, und in welche bei jeder Umdrehung eine abgemessene Menge an Kraftfutterbrocken zur Futterkrippe befördert wird, und wobei der Antrieb, insbesondere durch die Zeitschaltung, so auf den Zylinder wirkt,dass eine gewisse genau abgemessene Menge während der ganzen Zeit des Melkens gleichmässig und mit der Fressgeschwindigkeit gleichlaufend, also langsam und kontrolliert, kontinuierlich in die Futterkrippe der Milchkuh dosiert wird.

Die Kanten der Aussparungen sind scharf, sodass die infolge der Schwerkraft in die Aussparungen fallenden Teilchen kein Klemmen oder Verstopfen verursachen können. Gegen die Innenwand des oberseitigen Stutzens, an der Stelle, an der der sich drehende Zylinder vorbei läuft, ist ein Metallstreifen oder Messer angeschweisst, durch de bzw. das etwaige länglich geformte Brocken, die durch ihre Grösse ein Klemmen verursachen könnten, beim Eintritt in die Aussparung bzw. Aussparungen des Zylinders abgeschnitten werden.

Jede Aussparung für den Transport der abgemessehen Menge des Futters ist ein keilrinnenförmiger Einschnitt im rotierenden Zylinder, welcher am Umfang des Zylinders breiter ist als an der Seite, die der Achse zugekehrt ist, sodass die Teilchen an der Unterseite der Vorrichtung leicht aus der Aussparung in den unteren Stutzen hinein fallen können.

Der äussere Umfang des rotierenden Zylinders hat einen etwas geringeren Halbmesser als der innere Umfang des zylinderförmigen Gehäuses, sodass der Zylinder frei drehbar ist.

Die rotierbare Achse, auf welcher des Zylinder montiert ist, hat eine staubgeschützte zentrische Lagerung in den Stirnflächen des horizontalen zylinderförmigen Gehäuses; sie steht daraus hervor und wird von einem Elektromotor mit stufenloser Regelung und Verzögerungsgetriebe (10 Umdr./Min) angetrieben, welches durch eine Steuerschaltung eingestellt wird, die einen Teil eines Schaltkreises mit Programmierung darstellt.

Vorzugsweise ist diese eine Rechnerprogrammierung in Gestalt einer Platine mit aufgedruckten Leitern, wodurch die vorgesehene Menge pro Zeiteinheit sowie die Zeitdauer festgelegt werden.

Die Steuerschaltung für den Elektromotor kann aber auch aus einer einfachen Zeitschaltuhr bestehen, die jeweils nach der für das Melken festgelegten Zeitspanne (7 Minuten) abschaltet und nach einer Pause wieder einschaltet, sodass das Melken einer Anzahl von Kühen durch diese Fütterung einen geordneten und ruhigen Verlauf nimmt.

Das Verfahren des Melkens und Fütterns mit Hilfe der Vorrichtung gemäss der Erfindung ist insbesondere zweckmässig bei der Anwendung im Durchlaufmelkstall, in welchem eine grosse Anzahl von Kühen in Gruppen eingeteilt, gemolken und gefüttert wird; es kann in allen Arten von Durchlaufmelkställen zur Anwendung gelangen.

Eine Anzahl von diesen Dosiervorrichtungen kann auf einer einzigen Antriebsachse montiert sein, sodass eine Anzahl von Kühen nebeneinander, doch getrennt voneinander mit festgelegten zeitlichen Zwischenräumen gemolken und gefüttert werden kann.

Infolge der Anwendung des keilrinnenförmigen oder ähnlichen Ausschnitts wird nicht nur eine genaue und individuell anpassungsfähige Dosierung des Kraftfutters erzielt, doch werden auch Betriebsstörungen vermieden.

Das Gerät ist klein, leicht und kann bequem im Melkstall montiert werden. Durch die geringe Zahl von Zubehörteilen und dadurch, dass das Futter weder mit der Achse noch mit dem Antrieb in Berührung kommen kann, werden Verschleiss und Wartung auf ein Minimum reduziert.

Bei Versuchen in einem grossen Landwirtschaftsbetrieb hat sich gezeigt, dass die Kühe besser in den Stall kommen, dass die Ruhe im Stall optimal ist, dass für den Melker weniger Arbeit entsteht und die Kühe das Melkgerät nicht mehr durch Treten abstreifen.

Der Ertrag an Milch pro Kuh nimmt durch diese Ruhe zu, und der Verbrauch an Kraftfutter kann vollständig kontrolliert werden, weil keine Vergeudung mehr auftreten kann und der ganze Vorgang planmässiger abläuft infolge der zentralen Bedienung.

Die Vorrichtung und das Verfahren werden an Hand der beigefügten Zeichnungen 1-2, die vertikale Querschnitte von Ausführungsbeispielen der Erfindung darstellen, näher erläutert.

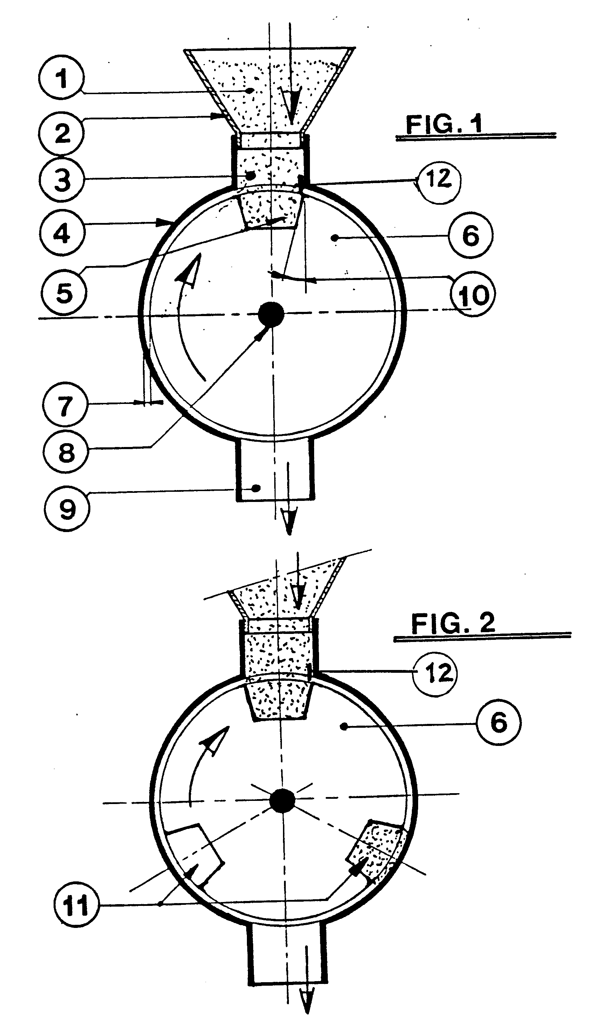

Die Figur 1 zeigt eine Ausbildungsform der Erfindung, worin (1) das aus dem Silo kommende Futter (siehe Pfeil) darstellt; (2) ist der Zufuhrtrichter, (3) der obere Stutzen, (4) das Gehäuse in der Form eines horizontalen Zylinders, (5) eine Aussparung in der Form eines keilrinnenförmigen Teilsegments im Zylinder (6); (7) ist das Spiel zwischen dem äusseren Umfang des Zylinders (6) und dem inneren Umfang des Gehäuses (4), wobei (8) die zentrisch gelagerte drehbare Achse darstellt, (9) den unteren Stutzen und (10) den Winkel der Abschrägung der Kante des keilrinnenförmigen Einschnitts oder der Rinne angibt. In Figur 2 wird eine Ausbildungsform der Erfindung mit denselben Zubehörteilen und mit drei zueinander versetzten Dosierrinnen (11) gezeigt, von denen eine mit Futterteilchen angefüllt ist und eine weitere nach der Entleerung am unteren Stutzen vorbei geführt ist.

In den Figuren zeigt (12) die Position eines Streifens oder Messers für das Abschneiden grösserer Brocken.

Die oberen und unteren Pfeile deuten die Richtung des Transports der Brocken an, und der mittlere Pfeil bezeichnet die Umdrehungsrichtung des rotierenden Zylinders.

Die Erfindung umfasst weiter Zusammenbauten verschiedener Dosiervorrichtungen, die entweder auf ein und derselben Achse oder auf verschiedenen Achsen montiert sind.

Die Vorrichtung kann aus rostfreiem Stahl hergestellt werden, doch das Gehäuse und die Innentrommel können auch aus normalem Stahlblech oder aus Duraluminiumlegierung bestehen.

Das Gehäuse und/oder die Innentrommel können auch aus einem harten Kunststoff wie z. B. Polyvinylchlorid oder Polykarbonat, oder aus einem thermohärtenden Polyester gefertigt sein.

**Patentansprüche**

1. Vorrichtung für das Verbreichen von trockenen Kraftfutterbrocken an jede einzelne Milchkuh während des Melkens im Melkstall, mit einem Antrieb durch einen Elektromotor mit stufenloser Regelung und Verzögerungsgetriebe mit Zeitschaltung, wobei diese Vorrichtung ein zylindrisches Gehäuse (4) mit Zufuhrstutzen (3) und Abfuhrstutzen (9) aufweist, in welchem Gehäuse um eine horizontale Achse (8) ein Zylinder (6) drehbar angeordnet ist, welcher mit einer keilrinnenförmigen Aussparung (5) oder mit drei derartigen Aussparungen (11) versehen ist, Welche am Umfang des Zylinders (6) breiter sind, als an der Seite, die den Achse (8) zugekehrt ist, und in welche bei jeder Umdrehung eine abgemessene Menge an Kraftfutterbrocken zur Futterkrippe befördert wird, und wobei der Antrieb, insbesondere durch die Zeitschaltung, so auf den Zylinder (6) wirkt, dass eine gewisse genau abgemessene Menge während der ganzen Zeit des Melkens gleichmässig und mit der Fressgeschwindigkeit gleichlaufend, also langsam und kontrolliert, kontinuierlich in die Futterkrippe der Milchkuh dosiert wird.

2. Vorrichtung gemäss Anspruch 1, dadurch gekennzeichnet, dass an der Innenwand des Zufuhrstutzens (3), an der Stelle, an der die keilrinnenförmige Aussparung (5) oder die drei Aussparungen (11) vorbeilaufen,ein Metallstreifen (12) angeschweisst ist, durch den länglich geformte Brocken beim Eintritt in die Aussparung abgeschnitten werden.

3. Vorrichtung gemäss Anspruch 1, dadurch gekennzeichnet, dass sie bei 10 Umdrehungen pro Minute während 7 Minuten Melkzeit Portionen von 8 Gramm trockener Kraftfutterbrocken pro 6 Sekunden liegert.

4. Vorrichtung zur Zufütterung von Kraftfutterbrocken an jede einzelne von vehreren Melkühen im Melkstall, dadurch gekennzeichnet, dass mehrere Vorrichtungen gemäss Anspruch 1 eine gemeinsame Antriebsachse (8) haben.

## Claims

1. An appliance for administering dry invigorating feed lumps to each individual milch-cow, during milking in the milking byre, with an electromotor driving with stepless control and retarding transmission with time limit switch, said appliance comprising a cylindrical housing (4) with supply pipe (3) and outlet pipe (9) and in said housing a cylinder (6) rotatable around a horizontal shaft (8), said cylinder having one segment-shaped carving (5) or three of such carvings (11), which at the circumference of said cylinder are wider than at the other side which is turned towards the shaft (8), and in which at each revolution an adjusted quantity of invigorating feed lumps is transported to the feeding trough, while the drive in particular by means of said time limit switch is effective with said cylinder (6) such that a certain exactly measured quantity is dosed continuously during the entire milking time evenly and equalized with the eating rate, consequently slowly and in a checked amount into said feeding trough of the milch-cow.

2. An appliance according to claim 1, characterized in that at the inner wall of the supply pipe (3), at the spot where the segment-shaped carving (5) or the three carvings (11) are passing by, a metal strip (12) is welded, whereby longitudinally shaped lumps are cut off at entering into said carving.

3. An appliance according to claim 1, characterized in that with 10 revolutions per minute during a milking time of 7 minutes portions of 8 grammes of dry invigorating feed lumps are delivered per 6 seconds.

4. An appliance for additional feeding with invigorating feed lumps to each individual of several milch-cows in a milking byre, characterized in that a multitude of appliances as described in claim 1, is mounted on a joint driving shaft (8).

## Revendications

1. Dispositif pour l'administration de morceaux secs, de nourriture corroborative à chaque vache a lait séparément pendant la traite dans l'étable de vacherie, incité par un moteur électrique de régulation sans gradation et avec engrenage de retardement avec commutateur chronométrisé, ledit dispositif comprenant un boîtier cylindrique (4) avec un tuyau de transport (3) et un tuyau de délivrance (9), dans ce boîtier un cylindre (6) rotatif sur un essieu horizontal (8), ledit cylindre fourni d'une cannelure (5) en forme d'un segment plus large à la périphérie du cylindre (6) qu'à l'autre côté tourné vers l'essieu (8), ou bien avec trois de telles cannelures, dans lesquelles à chaque tour une quantité mesurée de morceaux de nourriture corroborative est transportée vers la mangeoire et en quoi la commande, en particulier en raison du commutateur, influe sur le cylindre (6) tellement qu'une quantité mesurée fut dosée dans la mangeoire de la vache à lait pendant toute la période de la traite, d'une manière continuelle proportionnée et égale à la vitesse de la pâture, c.à.d. lentement et controllée.

2. Dispositif d'après la revendication 1, caracterisé en ce qu'une bande métallique (12) est soudée à la paroi intérieure du tuyau de transport (3) à l'endroit ou la cannelure (5) en forme du segment où les trois cannelures (11) passent, par laquelle les morceaux formés oblong sont coupés à l'entrée dans la cannelure.

3. Dispositif d'après la revendication 1, caracterisé en ce que à 10 tours par minute pendant 7 minutes de la période de traite des portions de 8 grammes de morceaux secs de nourriture corroborative en chaque 6 secondes sont délivrées.

4. Dispositif pour supplémenter des morceaux de nourriture corroborative séparément à chaque vache à lait, d'un nombre de vaches dans l'étable de vacherie, caracterisé en ce que plusieurs dispositifs selon la revendication 1 ont un essieu de commande (8) en commun.

① 

② 

③ 

④ 

⑤ 

⑫ 

⑥ 

⑩ 

FIG. 1

⑦ 

⑧ 

⑨ 

FIG. 2

⑫ 

⑥ 

⑪